(19) Europäisches Patentamt / European Patent Office / Office européen des brevets

(11) **EP 4 386 611 A1**

(12) **EUROPEAN PATENT APPLICATION**

(43) Date of publication:
**19.06.2024 Bulletin 2024/25**

(21) Application number: **22213370.4**

(22) Date of filing: **14.12.2022**

(51) International Patent Classification (IPC):
**G06F 30/20** (2020.01)    **G06F 30/23** (2020.01)
**G06F 30/17** (2020.01)    **G06F 30/27** (2020.01)
**G06F 30/28** (2020.01)    G06F 111/10 (2020.01)

(52) Cooperative Patent Classification (CPC):
**G06F 30/17; G06F 30/20; G06F 30/23;**
**G06F 30/27; G06F 30/28;** G06F 2111/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Henkel AG & Co. KGaA**
**40589 Düsseldorf (DE)**

(72) Inventor: **Welters, Tim**
**40723 Hilden (DE)**

(54) **METHOD FOR OPTIMIZING A PHYSICAL PARAMETER OF AN ADHESIVE**

(57)      The invention provides a method (1) for optimizing a physical parameter of an adhesive (5) to be applied on a surface (311, 312). First a desired specification (2) of the adhesive (5) is obtained (101). Then a model (4) describing a reaction of the adhesive (5) is obtained (102), wherein an output of the model (4) corresponds to a parameter representative of the desired specification (2), wherein the model (4) is generated from electrical and/or mechanical and/or thermodynamics equations for at least one among elastic, ductile, fluid, solid materials, wherein the model comprises coefficients the values of which are obtained from reference measurements conducted on the adhesive (5). Then the model (4) is used (103) in simulations (11) of the adhesive (5) applied onto the surface (311, 312) according to different physical features (12), and the features for which the output of the model (4) provides parameter values compatible with the desired specification are selected (104).

FIG 1

**Description**

TECHNICAL FIELD

The invention pertains to the field of adhesive-related optimization processes and design of experiments in numerical form. The invention more particularly concerns the conception and use of numerical models of an adhesive in order to perform tests in numerical form instead of in physical form. These numerical simulations enable the determination of optimized physical parameters that the adhesive needs to fulfill to meet expected properties after deposition on a surface.

TECHNOLOGICAL BACKGROUND

Adhesives are used to combine elements together. To achieve a desired adhesive function (for example to stick two or more surfaces together with a certain bonding strength), a proper composition is required for the adhesive. One way to optimize the performance of adhesives lies in the selection of the appropriate chemistry and optimization of the chemical properties of the adhesive composition.

However, chemistry of the adhesive is not the only parameter that influences the quality of the bond that is formed when an adhesive is applied on a surface. Other physical parameters such as topological properties of the adhesive, in particular an amount of the adhesive that is applied, a thickness of an adhesive layer, a surface of the adhesive layer; positional properties relating to the choice of where the adhesive is placed on the surface or conditions under which the adhesive is deposited such as a temperature, deposition speed are all examples of parameters that influence the performance of the adhesive to fulfill a predetermined bonding task.

Basic knowledge of the adhesive generally remains limited to information provided on fact sheets by suppliers. This information typically comprises intrinsic characteristics of the adhesive such as its curing/setting temperature, minimum and maximum temperatures at which the adhesive remains efficient, thermal and or electrical conductivity among others. These characteristics are generally provided in the form of static data which do not enable users of the adhesive to determine how the adhesive should be used nor whether the adhesive will be efficient at fulfilling a predetermined bonding task.

A challenge for users is then to assess whether an adhesive will be capable of achieving a desired performance based only on this limited information in specific use cases in which the adhesive will be used. As of today, users in particular in industrial applications of the adhesives need to test different adhesives configurations one by one. To do so they build prototypes in order to fully understand the electrical, thermal or mechanical properties of the adhesives in their specific industrial applications. This process is very time-consuming, costly and complex.

For the above reasons, a method for optimizing a physical parameter of an adhesive is sought.

SUMMARY OF THE INVENTION

To address the above need, the invention provides a method for optimizing a physical parameter of an adhesive to be used to bind surfaces, the method comprising:

- obtaining at least one desired specification of the adhesive, wherein the desired specification comprises a desired value of a parameter of the adhesive when binding the surfaces;
- obtaining at least one model describing a reaction of the adhesive to a stimulus, wherein an output of the at least one model corresponds to a parameter representative of the at least one desired specification of the adhesive;
- using the at least one model in simulations of the adhesive binding the surfaces wherein different physical features are selected for the adhesive in each of the simulations, and
- selecting physical features for which the output of the at least one model provides parameter values differing from the desired value by less than a predetermined amount.

The invention overcomes the need to proceed with costly and lengthy experiments using prototypes. Using generated models of the behavior of the adhesive, all real-life applications of the adhesive can be tested in numerical form to select the best physical setup of the adhesive. The "setup" corresponds to physical features such as a size, a thickness, a position, a shape of the adhesive.

One aspect of the invention is that the model that is obtained to implement these simulations is not necessarily a full model describing every aspect of the response of the adhesive. Depending on the parameter that the user wishes to optimize (the desired parameter that is provided), the invention obtains a model adapted to the request of the user. For example, if the user is interested in ensuring certain electrical conductivity between the bound surfaces, the model corresponds to a description of the electrical properties of the adhesive. If the user is interested in a bonding strength of the adhesive, the model would rather comprise a description of the rheological behavior of the adhesive. Each of these aspects can form building blocks of a full description of the properties of the adhesive, but it is not always necessary to use a full model integrating all possible responses for a specific user task. It is also possible though, that a user defines a specific task comprising several complementary aspects such as rheological properties, thermal conductivity, waterproofness, electric conductivity. The method of the invention can obtain (for example by selection) the most suitable numerical description of the adhesive for each user request so that the computational burden when running simulations is reduced and simulations themselves speed up the process of determining the appropriate physical properties of an adhesive.

The invention provides flexibility in the selection of a model that is best suited for the desired parameter optimization. Adhesive manufacturers are more likely to understand the intrinsic properties of their product and can therefore test the adhesive extensively, thereby obtaining a series of data points usable to build different models describing adhesive behavior. One aspect of the invention is that the model is used in combination with different simulation scenarios of the user, which can be conducted in numerical form instead of real-life prototypes. The invention further enables to enhance the possibilities offered by numerical simulation tools relying for example on CAD software. Typically, numerical simulations use finite element analysis or other approaches to subject numerical surrogates of an object to different constraints. However, the numerical twin of the object is generally simplified and the presence of adhesives binding different portions of the object are generally modeled as a fixed connection between the two surfaces. Existing solutions are not capable of introducing the specific response of an adhesive nor to efficiently simulate how the presence of the adhesive impacts the response of an object composed of different portions bound together by adhesives. The invention provides further tools to overcome this challenge by providing a model of the adhesive usable in such numerical simulation tools.

According to an embodiment, the at least one model is generated from electrical and/or mechanical and/or thermodynamics equations for at least one among elastic, ductile, soft matter, solid materials, wherein the model comprises coefficients the values of which are obtained from reference measurements conducted on the adhesive.

The invention enables a flexible determination of the most suitable numerical model type for a specific context of use of an adhesive. The above list of possible physical properties that are taken into account to provide a model of an adhesive can be further expanded with other known physical descriptions of liquid or solid materials. As an adhesive may switch states from a liquid or semi-liquid to a solid state more than one type of physical descriptors may further be used to describe the behavior of the adhesive.

According to an embodiment, the at least one model is generated to be customized as at least one among: a solution of an analytical description of the adhesive interacting with the bound surfaces, an approximated model using iterative methods, a model trained using supervised learning, a model trained using reinforcement learning, a model built using statistical models, a model based on a numerical solution of a set of differential equations comprising varying boundary conditions, material parameters and wherein the model further comprises a subsequent model order reduction,_wherein the model comprises coefficients the values of which are obtained from reference measurements conducted on the adhesive.

The models generally comprise a core element (generally a known mathematical description of viscoplastic materials) which relies on fundamental physical principles. This core element is then used to generate a more customized version of the model adapted to the needs of the user. One way of describing the "customization" of a model is to consider it as a function of several variables (inputs that the user can change or that the adhesive is subject to when in use), one or more than one of which are physical properties of the adhesive such as its topological features or where it is placed (parameters affecting its interaction with the surfaces to be bonded).

According to an embodiment, the method further comprises:

- applying the adhesive on a surface of the surfaces to be bonded according to the selected physical features.

According to an embodiment, the at least one model describes a reaction of the adhesive to at least one among an electrical, mechanical and thermal stimulus.

According to an embodiment, the at least one desired specification is at least one among: a rheological property of the adhesive, a mechanical property of the adhesive, an electrical property of the adhesive, a thermal property of the adhesive, a bonding strength of the adhesive.

According to an embodiment, the physical parameter is at least one among: a topological parameter of the adhesive, a positional parameter of the adhesive, a parameter related to the deposition process of the adhesive.

According to an embodiment, the simulations are implemented using a finite element analysis method.

According to an embodiment, the simulations are implemented on a numerical three-dimensional replica of the adhesive in contact with a numerical three-dimensional replica of the surfaces to be bonded.

According to an embodiment, the method further comprises:

- obtaining an information identifying the adhesive
- obtaining the at least one model further based on the information identifying the adhesive.

Models generated for an adhesive generally apply well for that specific adhesive composition. Even though minor changes in the composition should not affect the coefficients used in the model (the ones that are typically extracted from measurements conducted beforehand typically by the adhesives manufacturer), it is best to generate a model that is specific to each adhesive or at least to a range of adhesive categories corresponding to different ranges of adhesive compositions.

According to an embodiment, the at least one model comprises equations relating to at least one among: a RLC circuit, a circuit comprising at least one diode, Perzyna formulations for viscoplasticity; Consistency formulations for viscoplasticity, elasticity formulations for stress strain, time-dependent plasticity, an equation of state describing thermodynamics of a system, a linear visco-elasticity formulation including time-dependencies, a time-independent plastic formulation, a time-dependent viscoplastic formulation, a time-dependent viscoplastic formulation including a hydrostatic-pressure dependency, rheological viscoplastic model equations describing an elastoviscoplastic hardening solid, strain-rate dependent plasticity models using the Perzyna formulation, flow-stress models based on equations of Johnson-Cook, flow-stress models based on equations of Steinberg-Cochran-Guinan-Lund, a model comprising equations that are derived from a one-dimensional combination of parallel and series connections of springs, dashpots and sliding friction elements, hyperelastic equations including time-dependent visco-hyperelasticity, equations based on different network models, a formulation for thermal conduction based on Fourier's equation, a Navier-Stokes equation describing fluid dynamics of a material including simplifications for boundary conditions, a formulation including fluid-structure interaction between a material and a substrate and laws of friction to describe tribology of a material contact.

The letter R refers to resistance, the letter L refers to inductance and the letter C refers to capacitance.

According to an embodiment, the at least one model is obtained by interpolating a function from reference measurements establishing a relationship between the electrical, mechanical or thermal stimulus and the output.

In particular, the interpolation is based on at least one among: a gaussian process, a Bayesian estimation of a Gaussian process, a maximum likelihood estimation of a Gaussian process, a method of moments, a polynomial interpolation, a spline interpolation, a mimetic interpolation, including multivariate interpolations for more than on dimension.

Interpolating using a finite number of numerical data points is a convenient means to determine a function describing the behavior of the adhesive and that can be used to determine coefficients of a function describing a model or to determine the model from scratch if there is a sufficient number of data points from measurements conducted on the adhesive.

According to an embodiment, the at least one model is obtained by selection among a database of pre-established models built from experimental data acquired with the at least one adhesive.

In particular, the method of the invention may include a step of determining the type of desired parameter value selected by the user, in order to discriminate between different generic adhesive models (thermal, electrical, rheological for example) and select the one or the combination of models that are suitable to solve the task of the user. Such an approach to select a model from a database of models can be implemented on the basis of the type of the desired parameter value (relating either to a thermal, electrical or rheological property of the adhesive) or on the basis of pre-recorded associations between types of parameters and model categories deemed to be compatible with a specific request (it could for example be based on a dimensional analysis of the type of parameter provided by the user).

According to an embodiment, the at least one model comprises a combination of two or more models.

More complex modelling situations sometimes can combine electrical and/or rheological and/or thermal models. The invention can assemble models or inform the user on how to run simulations that use several models at once.

The invention also pertains to a computer program product comprising program instructions configured to implement a method for optimizing a physical parameter of an adhesive to be used to bind surfaces, the method comprising:

- obtaining at least one desired specification of the adhesive, wherein the desired specification comprises a desired value of a parameter of the adhesive when binding the surfaces;
- obtaining at least one model describing a reaction of the adhesive to a stimulus, wherein an output of the at least one model corresponds to a parameter representative of the at least one desired specification of the adhesive;
- using the at least one model in simulations of the adhesive binding the surfaces wherein different physical features are selected for the adhesive in each of the simulations, and
- selecting physical features for which the output of the at least one model provides parameter values differing from the desired value by less than a predetermined amount.

In other words, the invention further pertains to a non transitory computer readable storage medium having stored thereon program instructions to implement a method for optimizing a physical parameter of an adhesive to be used to bind surfaces, the method comprising:

- obtaining at least one desired specification of the adhesive, wherein the desired specification comprises a desired value of a parameter of the adhesive when binding the surfaces;
- obtaining at least one model describing a reaction of the adhesive to a stimulus, wherein an output of the at least one model corresponds to a parameter representative of the at least one desired specification of the adhesive;

- using the at least one model in simulations of the adhesive binding the surfaces wherein different physical features are selected for the adhesive in each of the simulations, and
- selecting physical features for which the output of the at least one model provides parameter values differing from the desired value by less than a predetermined amount

BRIEF DESRIPTION OF THE DRAWINGS

The present disclosure will hereinafter be described in conjunction with the following drawing figures, wherein like numerals denote like elements, and:

Fig. 1 is a flowchart illustrating steps of the method according to an embodiment;
Fig. 2 is a flowchart illustrating steps of a method to determine a function usable as a model in the method according to an embodiment;
Fig. 3a and Fig 3b are schematic representations of two surfaces bound by adhesives. The examples of Fig. 3a and Fig. 3b show different physical configurations for the adhesive;
Fig. 4 comprises a graphical representation of the stress / strain reaction of an adhesive according to an embodiment;
Fig. 5 comprises a graphical representation of the stress / strain reaction of an adhesive according to another embodiment;
Fig. 6 is a schematic illustration of a simple model describing the viscoplastic response of an adhesive according to known mathematical equations.

DETAILED DESCRIPTION

The invention pertains to the field of optimization of the physical structure of an adhesive to be applied between surfaces to be bound. In order to select topological features of the adhesive in a specific application, the invention can be implemented to determine the best physical features of the adhesive using numerical simulations of different topological structures rather than to build a multitude of real-life prototypes in which the topological structures are tested one by one.

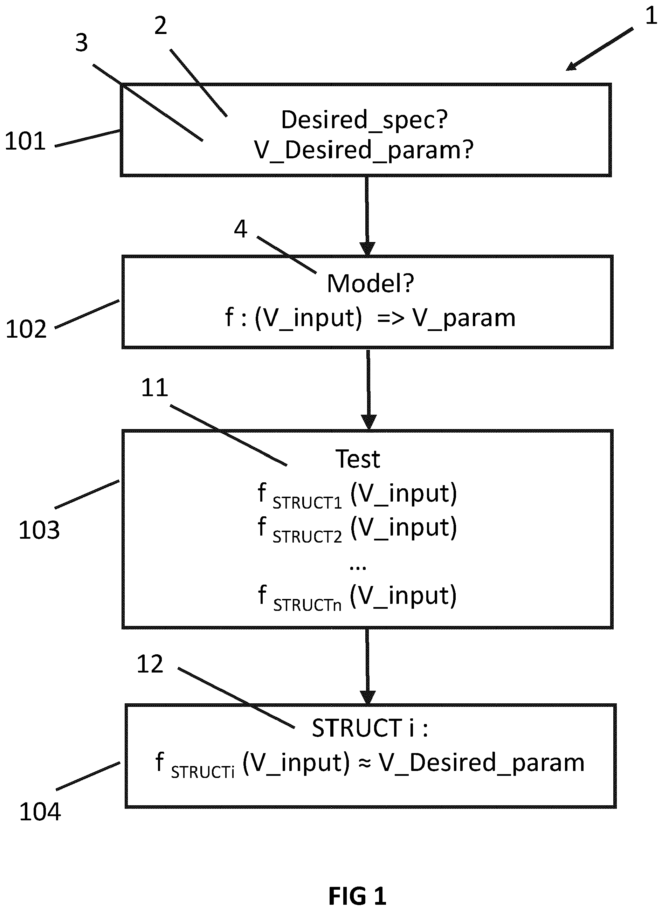

A method of the invention can for example involve the steps illustrated on figure 1. Figure 1 is a flowchart of a method 1 to optimize the physical parameter of an adhesive.

The method 1 typically comprises a first step of obtaining 101 a desired specification 2 of the adhesive, in which the desired specification comprises at least one desired value 3 of a parameter of the adhesive. These parameters may typically comprise at least one among : a rheological property of the adhesive, a mechanical property of the adhesive, an electrical property of the adhesive, a thermal property of the adhesive, a bonding strength of the adhesive. Depending on the type of parameter that a user is interested in optimizing, the method of the invention will select a most appropriate model among a set of available or generated models that are provided for example by the adhesives manufacturer or supplier, based on previously acquired information on the response of the adhesive in laboratory conditions. Alternatively, a customized model can be generated based on the specific inputs provided by a user, from generic available models.

Then, the method comprises a step of obtaining 102 a model 4 or at least one model 4 that describes a relationship between a stimulus applied to the adhesive and a response of the adhesive to that stimulus, wherein the response is a parameter representative of the desired specification of the adhesive.

For example, based on the obtained desired specification 2 it can be determined that a rheological property of the adhesive is sought, typically a certain bonding strength or resistance to mechanical stress. Based on this information the method 1 may then select among different available descriptions of the response of the adhesive one which describes the evolution of the bonding strength of the adhesive as a function of the stress applied. Such descriptions are typically translatable in the form of a numerical function that links stress to bonding strength.

Such a function can be generated on the basis of known mathematical equations describing viscoplastic materials, but in which coefficients (adjustable parameters) are fixed by preliminary measurements. In practice, a manufacturer of the adhesive generally knowns the chemistry of the adhesive best and can rely on internal knowledge of the adhesive to run a set of laboratory tests designed to study the response of the adhesive to different stimuli. This leads to a series of measurements that can be fitted by mathematical formulas from literature in order to determine these adjustable parameters or coefficients.

Different physical aspects of the adhesive may be tested to generate for each aspect a different "function" describing the response of the adhesive to stimulus. Typically these can include aspects such as the thermal response of the adhesive (its thermal conductivity for example or the influence of temperature on the bonding strength once cured or set), the electrical response of the adhesive (for example the electrical conductivity of the adhesive as a function of size or the influence of electricity on the bonding strength), the rheological response of the adhesive (typically based on a viscoplastic model, in which the deformation of the adhesive is described or the bonding strength response of the adhesive, typically a stress/strain relationship describing the limits within which the adhesive may remain intact by elastic or plastic deformation before breaking). Each of these functions constitutes a model 4 of the adhesive.

Once a model 4 is obtained, the method 1 may proceed by using 103 the model 4 in different simulations 11 involving each different physical features of the adhesive, in order to test the response of the adhesive in a given physical configuration.

Typically, the physical features or parameters are one among: a topological parameter of the adhesive, a positional parameter of the adhesive, a parameter related to the deposition process of the adhesive. Topological parameters comprise at least one among the shape of the adhesive, its thickness, size, density if the adhesive can be compressed. The positional parameters typically comprise a location of the adhesive with respect to the surfaces it binds together. In principle the positional parameters can be part of the topological parameters of the adhesive. However, the positional parameters may further create special boundary conditions for the adhesive that can be reflected into the model 4 that is used to describe the response of the adhesive.

The type of simulations 11 that are run by the method 1 of the invention may typically comprise finite element analysis simulations using three-dimensional models of the surfaces to be bound, which can be part of a numerical surrogate of the objects to be bound and the adhesive. Other simulations using other numerical tools to test the response of the system formed by the combination of the adhesive applied on the surfaces to be bound can be run. The numerical surrogates of the objects to be bound by the adhesive can typically be processed as computer assisted design (CAD) files.

One advantage of the invention relies in the enhancement of the possibilities offered by numerical simulation tools typically relying on CAD software. Typically, the presence of an adhesive to bind two surfaces in a CAD file is either totally neglected or approximated as a layer of a softer material. Including the specific rheological, thermal, or electrical response of an adhesive is challenging without a more accurate description of the specific physical properties of the adhesive. The invention offers a process that fills that gap and provides a better approximation of the response of an adhesive by replacing the adhesive by a model generated on the basis of tests run on the adhesive.

Having tested different physical features for the adhesive, the method 1 further comprises a step of selecting 104 one or a plurality of physical features 12 for which the simulated response of the adhesive complies with the expectations of the user. In particular, if a user sets a desired value of a parameter of the adhesive (for example a bonding strength), the physical feature 12 or combination of physical features 12 that provide a closest match to that desired value 3 via the simulations 11 is selected. Alternatively to a closest match, it is possible to define a range of acceptable values differing by less than a predetermined amount from the desired value 3, for example values within 1%, 5%, 10% or 20% of the desired value 3. Such a flexible approach tolerates more than one compatible set of physical features 12. That way, a user may select a set of physical features 12 using another selection criterion or criteria, for example esthetic criteria to discriminate among the suitable candidate sets provided by the method 1 of the invention.

The method 1 described above can be further enhanced by features that lead to further customization of the models used or that combine different models to generate more sophisticated descriptions of the behavior of the adhesive.

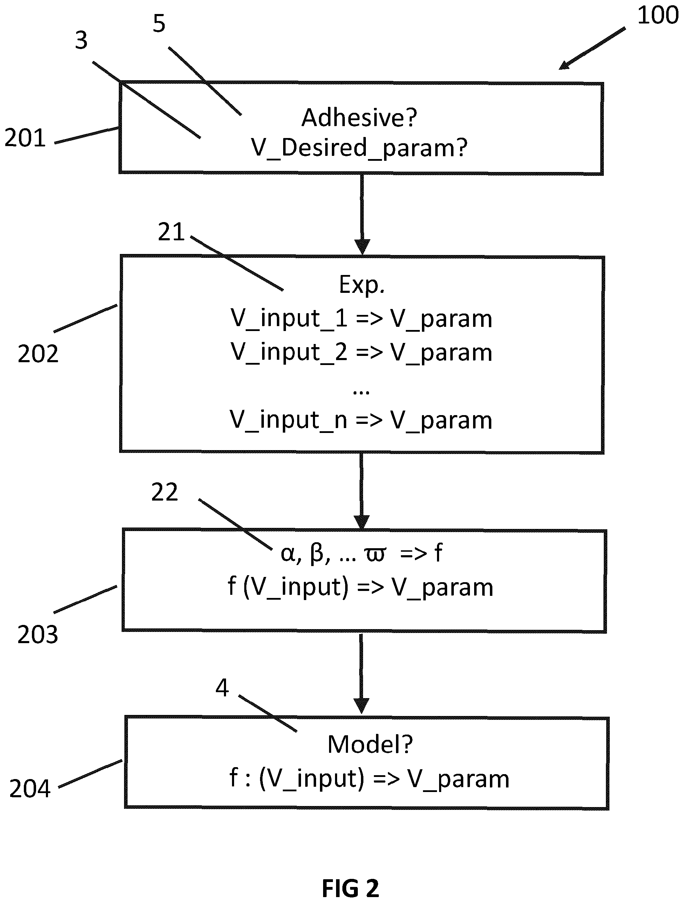

Figure 2 provides a flowchart illustrating steps that can be implemented in a method 100 to generate a model 4 usable in the method 1 described above.

The method 100 of figure 2 typically obtains the type of the adhesive 5 at a step 201 as well as the desired parameter selected for example by a user. The nature of the adhesive 5 is a useful information in order to differentiate between properties of different chemical compositions. Indeed, adhesives that have very close chemical compositions might typically have similar physical properties (electrical, rheological or thermal). Generally, the more the chemical composition of two adhesives differ from one another, the higher is the likelihood that their physical properties will differ. The methods 1, 100 described in this invention can use that information to make gross assessments on the usability of an existing model for an adhesive type for which there is no database or tailor-made model available based on the similarity of the chemical compositions of two adhesives.

Step 202 of method 100 consists in running experiments subjecting the adhesive 5 to different stimuli 21 and measure the response of the adhesive 5 to such stimuli. Typically, the type of experiments that are conducted can include stress strain tests in which a force is applied to the adhesive to see its elastic and plastic response to this force as well as to determine the rupture point of the adhesive. Other tests can involve thermal conductivity or the impact of temperature on the bonding strength, or electrical conductivity or the impact of electrical current on the bonding strength.

In step 203, method 100 determines coefficients 22 that form adjustable variables in mathematical equations describing the generic relationship between the stimuli applied to the adhesive and the measured response of the adhesive. These coefficients are determined by fitting the acquired data points from step 202 with the mathematical equations. Some additional approximations may be made based on additional input from the user to discriminate between several sets of acceptable coefficients 22.

The mathematical equations typically describe electrical and/or mechanical and/or thermodynamics responses of an elastic material, ductile material, soft matter material or solid material. Most naturally, adhesives binding two or more surfaces together are cured or set and in solid form. However, some specific applications may involve adhesives which bind two or more surfaces together while remaining in a state that can be assimilated to that of soft matter.

The selection of the mathematical equation is done on the basis of known literature regarding soft matter materials or solid materials. For example, if the desired specification is related to the electrical response of the adhesive, model 4 may be selected from among a RLC circuit, a circuit comprising at least one diode, a RC circuit or other known electrical models 4. If the desired specification is related to rheological properties of the adhesive, the model 4 may be selected from among Perzyna formulations for viscoplasticity, consistency formulations for viscoplasticity, elasticity formulations for stress strain, time-dependent plasticity. If the desired specification is related to thermal properties of the adhesive, the model 4 may be selected from among equations describing thermal conduction based on Fourier's equation.

When there is enough experimental data covering a wide range of parameter values, it is possible to build a customized model 4 by using interpolation techniques across the data points. This interpolation can for example be based on at least one among: a gaussian process, a Bayesian process, a maximum likelihood estimation, a method of moments. Such interpolations can be used to add terms to "generic" models such as those described in the previous paragraph as will be explained further below.

Other methods can also be used to generate a model 4 without relying on existing mathematical equations extracted from literature regarding soft matter of solids. For example the model 4 can be generated to be customized as at least one among: a solution of an analytical description of the adhesive interacting with the bound surfaces (for example a fit of the data points with an interpolated curve such as a polynomial interpolation), an approximated model 4 using iterative methods, a model 4 trained using supervised learning, a model 4 trained using reinforcement learning, a model 4 built using statistical models, a model based on a numerical solution of a set of differential equations comprising varying boundary conditions, material parameters and wherein the model further comprises a subsequent model order reduction.

It is also possible to combine the customized approach described above and the approach which relies on the use of a pre-existing mathematical equation. Indeed, if a pre-existing mathematical equation does not fit the data points obtained when measuring the response of the adhesive to certain constraints, it is possible to enhance an existing mathematical equation, for example using either one of the customization tools described in the above paragraph, to obtain a new mathematical equation that is a tailor-made model 4 for that specific adhesive. It is understood that the laws of physics always apply to the adhesives, but some particular applications of the adhesives require some fine tuning of generic formulations in order to take into consideration specific conditions. Such a hybrid approach relying both on generic equations describing the behavior of an adhesive (wherein the basic equations are selected based on the target desired specification input by the user) and on a modified version of these generic equations that take into considerations observations made from measurements conducted on the adhesive in certain applications and the interpolation techniques listed above.

Typically at step 204, the mathematical equation, optimized by including all relevant coefficients 22 is stored as a model 4 capable of describing the behavior of the adhesive, at least for a certain type of desired parameter. Some of the variables of the model 4 may be dependent on the structure of the adhesive (or its physical features 12). The term "structure" refers to the physical features 12 of the adhesive such as its shape, thickness or any other topological aspect of the adhesive.

In most cases, the mathematical equations used to describe the behavior of the adhesive are not explicitly dependent on the physical features 12. Indeed, these physical features 12 are indicators of the environment in which the adhesive is applied. When the adhesive is applied to bind two or more surfaces, a system is formed that comprises the adhesive and the two or more surfaces. In this configuration, the system will behave differently depending on the physical features 12 selected by the user, as each selection of physical features will create a different system. When testing the response of a system comprising several elements that interact with one another, simulation tools such as finite element analysis is used.

In a finite element analysis, a system that can typically be comprised of several elements interacting with one another, are divided into voxels (three-dimensional pixels) that form a grid. Each voxel is deemed to be made of a homogenous medium that can be modeled using specific mathematical equations. The interaction between voxels is then determined using certain boundary conditions. The physical features 12 of an adhesive in a simulation will define the number of voxels assigned to the adhesive and the location of the adhesive in the system will influence the interaction of the adhesive with the elements that it binds together.

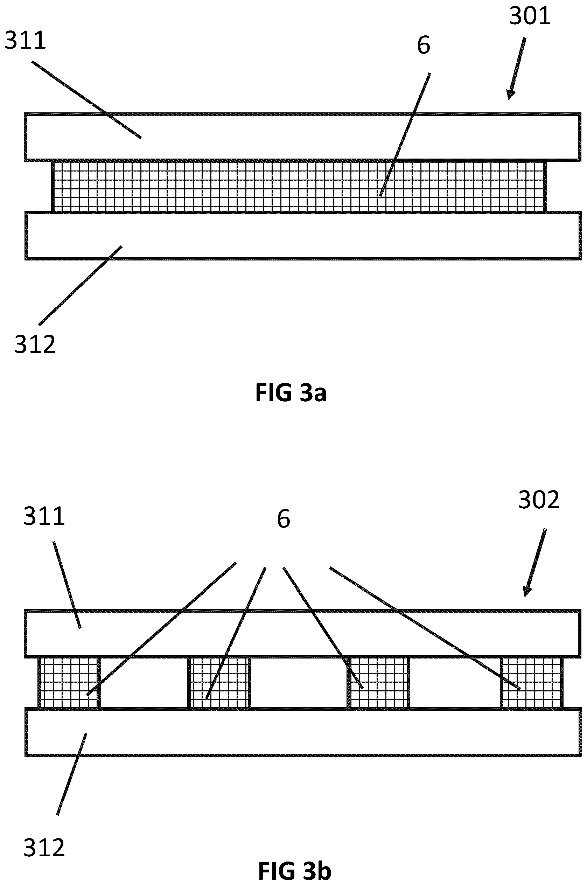

Figures 3a and 3b provide two schematic representations of a system 301, 302 formed by the adhesive having a certain structure 6 and the surface to be bound 311, 312. The arrangement of the adhesive 5 either as a thick layer as on figure 3a or a several small islands as on figure 3b leads to different stress train reactions of the system 301, 302 when mechanical stress is applied thereto (for example horizontal stress applied in opposite directions on each of the two surfaces to be bound).

The advantage of the method of the invention lies in the possibility to feed a simulation tool such as a finite element analysis tool with numerical descriptors (in the form of a model 4) that describe the physical response of the adhesive within a system 301, 302 when subject to certain inputs.

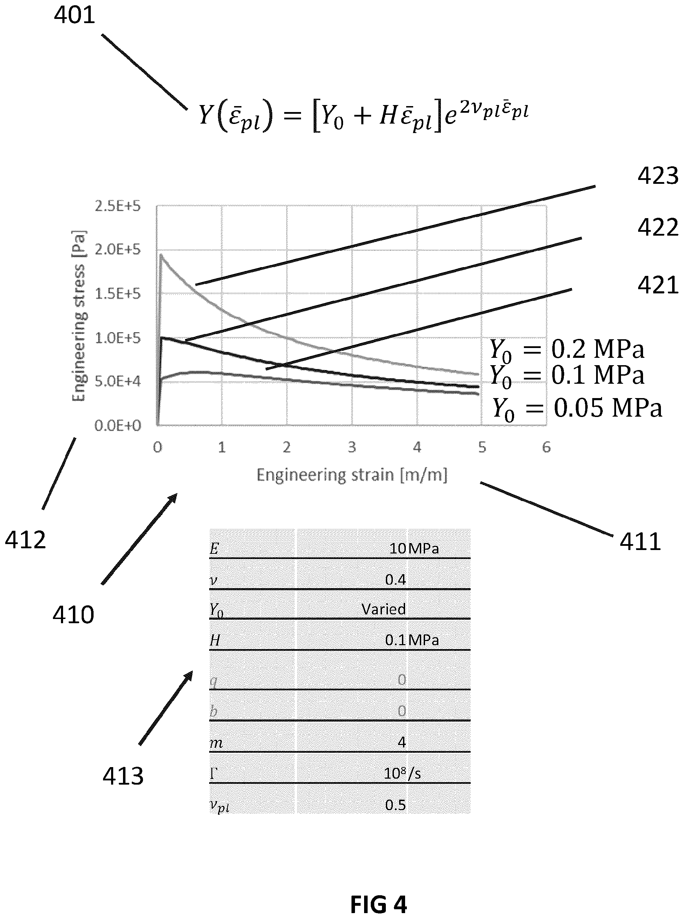

Figures 4, 5 and 6 provide some illustrations of the type of curves one can obtain when using a model 4 on an adhesive and by modifying certain parameters of that model. Examples provided in these figures rely on mathematical equations belonging to the field of viscoplastic response of solids.

The graph of figure 4 shows different stress responses of an object subject to a specific strain over time based on a viscoplastic model using a Perzyna-type viscoplastic formulation.

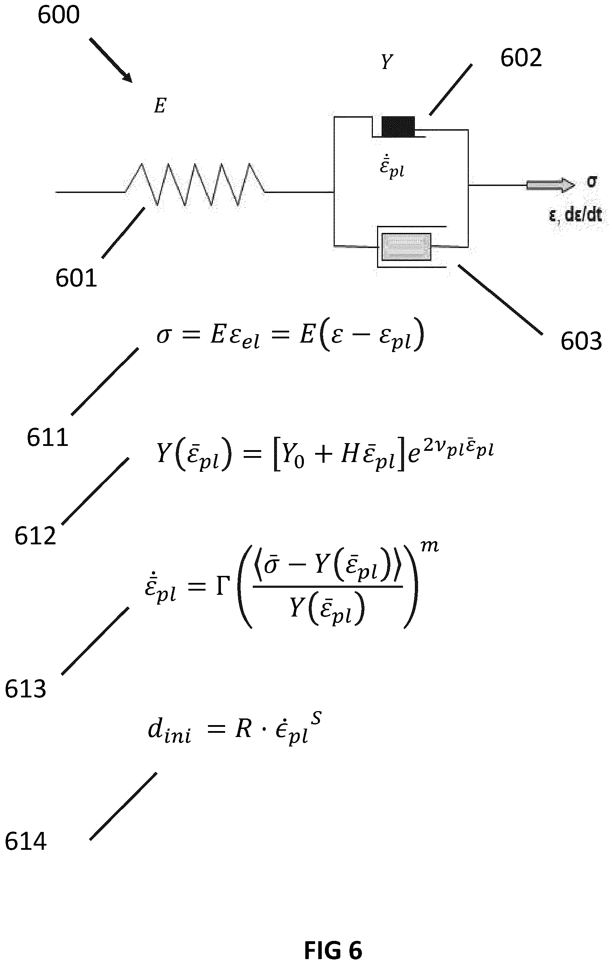

Figure 6 shows the mechanical equivalent model 600 in terms of a spring 601 with a stiffness E in series with a parallel configuration of a damper 603 and a friction element 602. The underlying equations are the elastic and plastic strain response 611, the yield stress evolution with plastic strain 612, the evolution of plastic strain with time 613, and the plastic strain at damage initiation 614. The variation of the different parameters allows the adjustment of the stress-strain over time response to match experimental results or to create new, virtual material representations.

In figures 4, 5 and 6, $\sigma$ refers to the strain response, $\varepsilon$ refers to the Young modulus of the adhesive, E the stiffness of the spring within the Perzyna-type viscoplatic formulation, $\varepsilon_{pl}$ refers to the plastic strain and $\varepsilon_{el}$ to the elastic strain, Y refers to the yield stress, $\overline{\varepsilon_{pl}}$ refers to the equivalent plastic strain, $\dot{\overline{\varepsilon}}_{pl}$ refers to the equivalent plastic strain rate that is expressed with the evolution law for plastic strain 613 , Y0 refers to initial yield stress for zero plastic strain, v refers to elastic Poisson ratio, $\Gamma$ refers to the rate parameter of the overstress law, H refers to the yield curve slope for large strain or tangent modulus, R refers to the plastic strain at damage initiation at strain rate 1, S is a power law exponent of the strain rate dependency of the damage initiation plastic strain, $d_{ini}$ is the plastic strain at damage initiation, m is the overstress exponent, b refers to the hardening parameter corresponding to the exponent hardening factor, q refers to the prefactor for exponential hardening, and $Y(\overline{\varepsilon_{pl}})$ 401 refers to the hardening curve (true stress).

Figure 4 shows the effect of varying the initial yield stress $(Y_0)$ with three different curves 421, 422, 423. Table 413 provides values selected for the parameters intervening in the hardening curve 401. The graphical representation 410 of figure 4 shows the engineering stress in Pa on a vertical axis 412 as a function of the engineering strain on a horizontal axis 411.

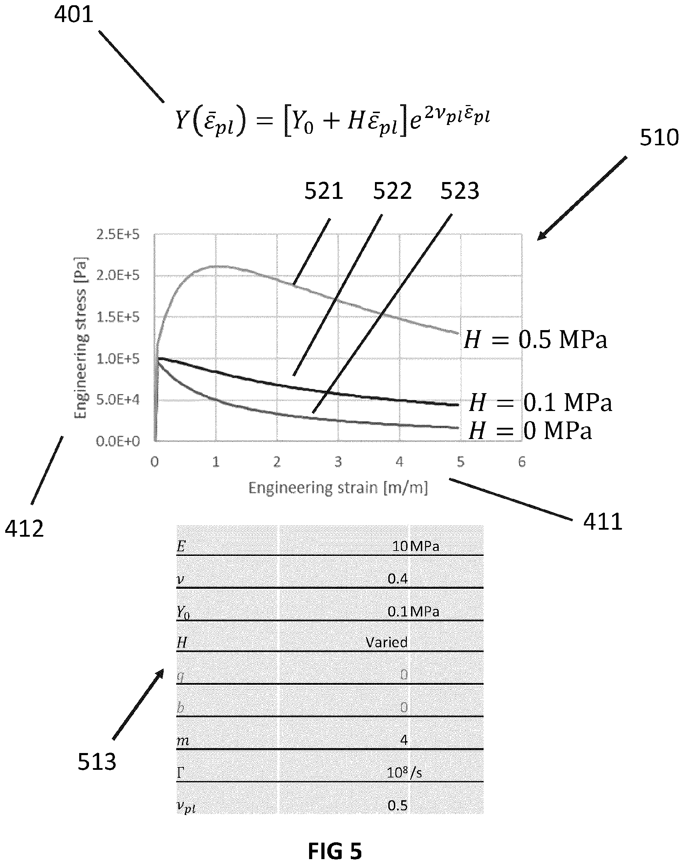

Figure 5 shows stress-strain responses for different values of the hardening modulus (H). The hardening curve 401 $Y(\overline{\varepsilon_{pl}})$ shows three curves 521, 522, 523 for different values of the hardening modulus H on a graphical representation 510 using the same types of horizontal and vertical axes as in figure 4. Table 513, similarly to table 413 of figure 4 provides values selected for the parameters intervening in the hardening curve 401.

The above method can be applied in different specific contexts, for which appropriate models describing the behavior of an adhesive can be either selected from an existing range of models available for example in a database or can be customized based on the specific inputs provided by a user or can be generated using input provided by the user and using numerical tools modifying existing mathematic descriptions of the behavior of an adhesive. For example, for a process regarding the optimization of a physical parameter which is the optimization of a battery design, the design consists of all the parts in a battery, the battery cells, the bus bars leading the electrical currents to and from the cells, the heat sinks of the cooling systems, the adhesives, potting materials and gap fillers and other materials contributing to the thermal conduction in the system. Each material (gap fillers, potting materials) of the thermal conduction in the gap fillers, potting materials and thermally conductive adhesives parameterized by the thermal conductivity, specific heat capacity and density of the materials together with the heat equation based on Fourier's law, are solved on a grid by means of the method of finite elements or finite differences for a specific geometry. This allows a prediction of the cooling performance and thus an optimization of material topology and physical properties.

As another example the method of the invention can be applied to the optimization of the physical parameters for a lamination application. This process starts with selecting an adhesive which fits into the process and identifying the boundary conditions of the application. With the selected adhesive experiments are conducted to determine the mechanical behavior such as the stress response to different strains applied on different time scales and at different temperatures. This data is then used to select and calibrate a model like the one shown in figure 6: i.e. the material coefficients in the constituting equations of the Perzyna-type viscoplastic model are fixed as a function of the temperature. This general material description or material model of the adhesive for the selected boundary condition situation can be used in combination with the physical parameters of the laminate, the geometry and appropriate substrate models, to predict the peel behavior of the laminate in the range of the applicable boundary conditions. This predictive model can also be used to optimize the physical parameters of the laminate. Model order reduction techniques can be applied to the detailed model to derive a simpler and less computationally intensive representation to be used for fast optimizations or to couple it with models with a broader scope, like a data-based model of the whole lamination process.

The method described above, which comprises a step of defining a target desired specification of an adhesive, obtaining and/or generating a model describing the behavior of the adhesive that is adapted to predict as an output the response of the adhesive to different inputs, and then using the model by simulating different inputs to identify the right adhesive parameters suitable for achieving the desired values for the provided target specification can be used in a wide variety of industries in order to overcome the need to make real life tests and protptypes of adhesive configurations deposited on surfaces to be bound. A realistic prediction can be made using the method of the invention in numerical form based on past knowledge of the behavior of the adhesives. The numerical predictions are then further followed by a real life deposition of the determined optimized adhesive configuration to bind surfaces together.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the various embodiments in any way. Rather, the foregoing detailed description will provide those skilled in the art with a convenient road map for implementing an exemplary embodiment as contemplated herein. It being understood that various changes may be made in the function and arrangement of elements described in an exemplary embodiment without departing from the scope of the various embodiments as set forth in the appended claims.

**Claims**

1. A method (1) for optimizing a physical parameter of an adhesive (5) to be used to bind surfaces (311; 312), the method comprising:

   - obtaining (101) at least one desired specification (2) of the adhesive (5), wherein the desired specification comprises a desired value (3) of a parameter of the adhesive (5) when binding the surfaces (311; 312);
   - obtaining (102) at least one model (4) describing a reaction of the adhesive (5) to a stimulus (21), wherein an output of the at least one model (4) corresponds to a parameter representative of the at least one desired specification (2) of the adhesive (5);
   - using (103) the at least one model (4) in simulations (11) of the adhesive (5) binding the surfaces (311; 312) wherein different physical features are selected for the adhesive (5) in each of the simulations (11), and
   - selecting (104) physical features (12) for which the output of the at least one model (4) provides parameter values differing from the desired value (3) by less than a predetermined amount.

2. The method (1) of claim 1, wherein the at least one model (4) is generated from electrical and/or mechanical and/or thermodynamics equations for at least one among elastic, ductile, soft matter, solid materials, wherein the model comprises coefficients the values of which are obtained from reference measurements conducted on the adhesive (5).

3. The method (1) of claim 1, wherein the at least one model (4) is generated to be customized as at least one among: a solution of an analytical description of the adhesive (5) interacting with the bound surfaces, an approximated model using iterative methods, a model trained using supervised learning, a model trained using reinforcement learning, a model built using statistical models, a model based on a numerical solution of a set of differential equations comprising varying boundary conditions, material parameters and wherein the model further comprises a subsequent model order reduction, wherein the model (4) comprises coefficients (22) the values of which are obtained from reference measurements conducted on the adhesive (5).

4. The method (1) of any one of the preceding, wherein the method further comprises:

   - applying the adhesive (5) on a surface of the surfaces (311; 312) to be bonded according to the selected physical features.

5. The method (1) according to any one of the preceding claims, wherein the at least one model (4) describes a reaction of the adhesive (5) to at least one among an electrical, mechanical and thermal stimulus.

6. The method (1) according any one of the preceding claims, wherein the at least one desired specification (2) is at least one among: a rheological property of the adhesive (5), a mechanical property of the adhesive (5), an electrical property of the adhesive (5), a thermal property of the adhesive (5), a bonding strength of the adhesive (5).

7. The method (1) according any one of the preceding claims, wherein the physical feature is at least one among: a topological parameter of the adhesive (5), a positional parameter of the adhesive (5), a parameter related to the deposition process of the adhesive (5).

8. The method (1) of any one of the preceding claims, wherein the simulations (11) are implemented using a finite element analysis method.

9. The method (1) of any one of the preceding claims, wherein the simulations (11) are implemented on a numerical three-dimensional replica of the adhesive (5) in contact with a numerical three-dimensional replica of the surfaces (311; 312) to be bonded.

10. The method (1) of any one of the preceding claims, wherein the method (1) further comprises:

   - obtaining an information identifying the adhesive (5);

- obtaining the at least one model (4) further based on the information identifying the adhesive (5).

11. The method (1) according to any one of the preceding claims, wherein the at least one model (4) comprises equations relating to at least one among: a RLC circuit, a circuit comprising at least one diode, Perzyna formulations for viscoplasticity; Consistency formulations for viscoplasticity, elasticity formulations for stress strain, time-dependent plasticity, an equation of state describing thermodynamics of a system, a linear visco-elasticity formulation including time-dependencies, a time-independent plastic formulation, a time-dependent viscoplastic formulation, a time-dependent viscoplastic formulation including a hydrostatic-pressure dependency, rheological viscoplastic model equations describing an elastoviscoplastic hardening solid, strain-rate dependent plasticity models using the Perzyna formulation, flow-stress models based on equations of Johnson-Cook, flow-stress models based on equations of Steinberg-Cochran-Guinan-Lund, a model comprising equations that are derived from a one-dimensional combination of parallel and series connections of springs, dashpots and sliding friction elements, hyperelastic equations including time-dependent visco-hyperelasticity, equations based on different network models, a formulation for thermal conduction based on Fourier's equation, a Navier-Stokes equation describing fluid dynamics of a material includingsimplifications for boundary conditions, a formulation including fluid-structure interaction between a material and a substrate and laws of friction to describe tribology of a material contact.

12. The method (1) according to any one of the preceding claims, wherein the at least one model (4) is obtained by interpolating a function from reference measurements establishing a relationship between the electrical, mechanical or thermal stimulus and the output.

13. The method (1) according to claim 12 wherein the interpolation is based on at least one among: a gaussian process, a Bayesian estimation of a Gaussian process, a maximum likelihood estimation of a Gaussian process, a method of moments, a polynomial interpolation, a spline interpolation, a mimetic interpolation, including multivariate interpolations for more than on dimension.

14. The method (1) according to any one of the preceding claims, wherein the at least one model (4) is obtained by selection among a database of pre-established models (4) built from experimental data acquired with the at least one adhesive (5).

15. Computer program product comprising program instructions configured to implement a method (1) for optimizing a physical parameter of an adhesive (5) to be used to bind surfaces (311; 312), the method comprising:

- obtaining (101) at least one desired specification (2) of the adhesive (5), wherein the desired specification comprises a desired value (3) of a parameter of the adhesive (5) when binding the surfaces (311; 312);
- obtaining (102) at least one model (4) describing a reaction of the adhesive (5) to a stimulus (21), wherein an output of the at least one model (4) corresponds to a parameter representative of the at least one desired specification (2) of the adhesive (5);
- using (103) the at least one model (4) in simulations (11) of the adhesive (5) binding the surfaces (311; 312) wherein different physical features (12) are selected for the adhesive (5) in each of the simulations (11), and
- selecting (104) physical features (12) for which the output of the at least one model (4) provides parameter values differing from the desired value (3) by less than a predetermined amount.

FIG 1

**FIG 2**

**FIG 3a**

**FIG 3b**

401

$$Y(\bar{\varepsilon}_{pl}) = \left[Y_0 + H\bar{\varepsilon}_{pl}\right]e^{2\nu_{pl}\bar{\varepsilon}_{pl}}$$

423

422

421

$Y_0 = 0.2$ MPa
$Y_0 = 0.1$ MPa
$Y_0 = 0.05$ MPa

412

410

411

413

| $E$ | 10 MPa |
|---|---|
| $\nu$ | 0.4 |
| $Y_0$ | Varied |
| $H$ | 0.1 MPa |
| $q$ | 0 |
| $b$ | 0 |
| $m$ | 4 |
| $\Gamma$ | $10^8$/s |
| $\nu_{pl}$ | 0.5 |

**FIG 4**

401

$$Y(\bar{\varepsilon}_{pl}) = [Y_0 + H\bar{\varepsilon}_{pl}]e^{2\nu_{pl}\bar{\varepsilon}_{pl}}$$

510

521  522  523

$H = 0.5\,\mathrm{MPa}$

$H = 0.1\,\mathrm{MPa}$

$H = 0\,\mathrm{MPa}$

412

411

513

| | |
|---|---|
| $E$ | 10 MPa |
| $\nu$ | 0.4 |
| $Y_0$ | 0.1 MPa |
| $H$ | Varied |
| $q$ | 0 |
| $b$ | 0 |
| $m$ | 4 |
| $\Gamma$ | $10^8$/s |
| $\nu_{pl}$ | 0.5 |

**FIG 5**

600

$E$

$Y$    602

$\dot{\bar{\varepsilon}}_{pl}$

601

603

$\sigma$

$\varepsilon, \, d\varepsilon/dt$

$$\sigma = E\varepsilon_{el} = E\left(\varepsilon - \varepsilon_{pl}\right)$$

611

$$Y\left(\bar{\varepsilon}_{pl}\right) = \left[Y_0 + H\bar{\varepsilon}_{pl}\right]e^{2\nu_{pl}\bar{\varepsilon}_{pl}}$$

612

$$\dot{\bar{\varepsilon}}_{pl} = \Gamma\left(\frac{\left\langle\bar{\sigma} - Y\left(\bar{\varepsilon}_{pl}\right)\right\rangle}{Y\left(\bar{\varepsilon}_{pl}\right)}\right)^m$$

613

$$d_{ini} = R \cdot \dot{\epsilon}_{pl}{}^S$$

614

**FIG 6**

Europäisches Patentamt

European Patent Office

Office européen des brevets

# EUROPEAN SEARCH REPORT

Application Number

EP 22 21 3370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MERGEL JANINE C ET AL: "Computational optimization of adhesive microstructures based on a nonlinear beam formulation", STRUCTURAL AND MULTIDISCIPLINARY OPTIMIZATION, SPRINGER BERLIN HEIDELBERG, BERLIN/HEIDELBERG, vol. 50, no. 6, 25 June 2014 (2014-06-25), pages 1001-1017, XP035448622, ISSN: 1615-147X, DOI: 10.1007/S00158-014-1091-1 [retrieved on 2014-06-25] * abstract * * page 1001 - page 1017 * ----- | 1-15 | INV. G06F30/20 G06F30/23 G06F30/17 G06F30/27 G06F30/28 ADD. G06F111/10 |
| X | OZTURK B ET AL: "Finite element based design of a new dogbone specimen for low cycle fatigue testing of highly filled epoxy-based adhesives for automotive applications", THERMAL, MECHANICAL AND MULTI-PHYSICS SIMULATION AND EXPERIMENTS IN MICROELECTRONICS AND MICROSYSTEMS (EUROSIME), 2013 14TH INTERNATIONAL CONFERENCE ON, IEEE, 14 April 2013 (2013-04-14), pages 1-4, XP032423879, DOI: 10.1109/EUROSIME.2013.6529889 ISBN: 978-1-4673-6138-5 * abstract * * page 1 - page 4 * ----- -/-- | 1-15 | TECHNICAL FIELDS SEARCHED (IPC) G06F |

The present search report has been drawn up for all claims

| Place of search | Date of completion of the search | Examiner |
|---|---|---|
| Munich | 11 May 2023 | Brandiska, Pavlina |

EPO FORM 1503 03.82 (P04C01)

Europäisches
Patentamt

European
Patent Office

Office européen
des brevets

## EUROPEAN SEARCH REPORT

Application Number

EP 22 21 3370

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | DA SILVA L F M: "Advances in Numerical Modelling of Adhesive Joints", SPRINGERBRIEFS IN APPLIED SCIENCES AND TECHNOLOGY 2012 SPRINGER SCIENCE AND BUSINESS MEDIA DEUTSCHLAND GMBH DEU, 2012, pages 1-93, XP002809251, DOI: 10.1007/978-3-642-23608-2_1 <br> * abstract * <br> * page 1 – page 93 * <br> ----- | | |

TECHNICAL FIELDS
SEARCHED        (IPC)

The present search report has been drawn up for all claims

| Place of search | Date of completion of the search | Examiner |
|---|---|---|
| Munich | 11 May 2023 | Brandiska, Pavlina |

EPO FORM 1503 03.82 (P04C01)